# FASCICULE DE BREVET EUROPEEN

(11) **EP 1 432 052 B1**
(45) Date de publication et mention de la délivrance du brevet: **01.03.2017**
(21) Numéro de dépôt: 02028484.0
(22) Date de dépôt: 19.12.2002
(51) Int. Cl.: H01M 2/10, G04C 10/00

(54) **Dispositif de montage de source d'energie pour appareil electronique portable**
Vorrichtung zur Montage von einer Energiequelle für tragbares elektronisches Gerät
Mounting device of energy source for portable electronic device

(43) Date de publication de la demande: 23.06.2004
(73) Titulaire: ETA SA Manufacture Horlogère Suisse, 2540 Grenchen (CH)
(72) Inventeur: Kaelin, Laurent, 2615 Sonvilier (CH); Henriet, Fabien, 2800 Delémont (CH); Rebeaud, Jean-Philippe, 2088 Cressier (CH)
(74) Mandataire: Surmely, Gérard

(56) Documents cités:
- US-A- 3 945 193
- DATABASE WPI Section EI, Week 200176 Derwent Publications Ltd., London, GB; Class S04, AN 2001-663073 XP002242261 -& WO 01 77760 A (SEIKO INSTR INC), 18 octobre 2001 (2001-10-18)

## Description

La présente invention concerne un appareil électronique portable comportant des circuits électroniques alimentés par une source d'énergie électrique telle qu'une batterie, et comportant un logement agencé pour la réception d'une source d'énergie électrique, et un couvercle agencé pour fermer ledit logement, lequel logement présentant, à proximité de sa périphérie, des moyens de retenue de la source d'énergie présentant au moins une première position de fermeture dans laquelle ladite source d'énergie est retenue dans ledit logement.

L'état de la technique comprend de nombreux documents relatifs à des dispositifs de montage de pile.

La demande de brevet internationale WO 01/77760 A1, publiée le 18 octobre 2001 décrit un dispositif de montage d'une pile-bouton dans le boîtier d'une montre électronique. Ce dispositif comporte notamment un logement, sensiblement cylindrique, moulé à partir de matière plastique et ouvert sur la face arrière de la montre. Le logement comprend, à sa périphérie, des languettes s'étendant depuis le fond en direction de l'ouverture et préférablement moulées d'une pièce avec le logement. Chaque languette présente une portion recourbée, dans la région de son extrémité, prévue pour former une zone d'appui sur la face de la pile orientée du côté de l'ouverture, lorsque la pile est montée dans le logement. Le montage est effectué par déformation élastique des languettes.

On peut noter que cette solution prévoit que la portion recourbée d'une languette s'élargie d'un bord de la languette vers l'autre de manière à présenter une zone d'appui de surface suffisamment importante pour garantir un maintien axial efficace de la pile dans le logement.

Toutefois, cette structure particulière comporte un inconvénient en ce que pour introduire une pile dans le logement, celle-ci doit être présentée de biais à travers l'ouverture du logement. Ainsi, une telle introduction est délicate à mettre en oeuvre sur une chaîne de montage automatisée.

En outre, la structure décrite dans la demande de brevet internationale précitée présente un autre inconvénient lié à un risque de défaut du maintien de la pile en cas de choc. En effet, si le choc est suffisamment violent, la pile qui présente une masse relativement importante comparativement aux éléments constitutifs de la montre, peut être projetée dans une direction telle qu'elle peut déformer les languettes élastiques et s'extraire du logement. Dans ce cas, la première conséquence du mouvement inopiné de la pile est un risque de rupture de l'alimentation électrique de la montre.

Une solution à ce problème est prévue, dans la demande internationale, pour améliorer le maintien de la pile dans son logement. Dans ce but, un mode de réalisation particulier prévoit la mise en place d'ergots sur le dessus de la portion recourbée des languettes, ces ergots coopérant avec le couvercle ou fond pour déformer sensiblement les languettes en direction de la pile. Ainsi, cette dernière est mieux maintenue dans son logement en cas de choc.

Toutefois, un mouvement brutal de la pile peut entraîner des problèmes supplémentaires, en particulier lorsque le couvercle fermant le logement ou, dans le cas du document précité, le fond de la montre n'est pas solidement fixé au boîtier, par exemple vissé ou maintenu par des vis. En se dégageant des languettes, la pile peut être projetée contre le couvercle du logement et nuire à la fixation de celui-ci sur le boîtier de la montre. Dans le cas d'une montre étanche, cela peut conduire à un défaut d'étanchéité de la montre. Par ailleurs, suivant la force du choc, le couvercle peut éventuellement se dégager complètement de son logement et être perdu. Le mode de réalisation prévoyant des ergots pour éviter une déformation des languettes ne permet pas de pallier correctement à ce problème dans la mesure où une force importante exercée par la pile sur les languettes est directement transmise au couvercle en direction de l'extérieur du boîtier de la montre. Le couvercle peut donc également se dégager du logement dans ce cas.

La présente invention a pour but principal de pallier les inconvénients de l'art antérieur susmentionnés en améliorant le maintien de la pile dans son logement et en évitant qu'un mouvement brusque de la pile suite à un choc ne provoque le dégagement du couvercle ou fond depuis son emplacement dans le logement de pile.

A cet effet, l'invention a pour objet un appareil électronique portable selon la revendication 1, dont le couvercle présente des moyens de maintien destinés à être disposés entre les moyens de retenue et la périphérie du logement et, permettant de maintenir les moyens de retenue de la source d'énergie dans leur première position.

Grâce à ces moyens de maintien, les moyens de retenue de la pile ne peuvent pas se déformer en cas de choc, de la manière décrite plus haut en relation avec l'art antérieur cité. En outre, comme les moyens de maintien disposés sur le couvercle n'exercent pas leur action dans la direction de la hauteur du logement de pile mais transversalement, un mouvement brusque de la pile tendant à expulser le couvercle en dehors du logement aura pour conséquence l'application d'une force transversale sur ses moyens de maintien. Ainsi, tout risque de désengagement du couvercle est écarté.

Les moyens de retenue de la pile dans le logement comprennent avantageusement une pluralité de languettes élastiques disposées à la périphérie du logement. Chacune de ces languettes comporte préférablement une courte portion recourbée à proximité de son extrémité, la portion recourbée formant ainsi une zone d'appui susceptible de contacter la face de la pile orientée en direction de l'ouverture du logement.

D'autre part, les moyens de maintien du couvercle sont préférablement réalisés sous la forme d'une paroi, annulaire si la pile est du type pile-bouton, s'engageant contre la surface externe des languettes élastiques lors de la mise en place du couvercle dans le logement. Les dimensions de la paroi sont ajustées de manière que celle-ci exerce une force transversale sur les languettes, tendant à les repousser légèrement en direction de la pile lorsque le logement est fermé.

Dans un mode de réalisation préféré, correspondant au cas particulier dans lequel les moyens de fermeture du logement sont constitués par un couvercle clipsé, c'est-à-dire fixé au logement par une liaison du type à cran, la paroi de maintien du couvercle comporte également un cran susceptible de coopérer avec un bourrelet adapté réalisé à la périphérie du logement.

Il est également prévu une variante de réalisation dans laquelle les languettes de retenue de la pile remplissent une fonction supplémentaire, à savoir l'établissement d'un contact électrique avec une borne de la pile. Dans ce cas, les languettes sont réalisées en un matériau électriquement conducteur présentant des propriétés élastiques.

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 représente une vue en perspective éclatée du dispositif de montage d'une pile selon un premier mode de réalisation préféré de la présente invention;
- la figure 2 représente une vue en coupe verticale du dispositif de montage représenté sur la figure 1, le dispositif étant assemblé;
- la figure 3 représente une vue perspective des moyens de retenue de la pile selon un second mode de réalisation préféré de la présente invention;
- la figure 4a représente une vue en coupe du dispositif de montage d'une pile correspondant au second mode de réalisation de la figure 3, le couvercle n'étant pas engagé dans le logement de pile, et
- la figure 4b représente une vue similaire à la vue de la figure 4a, le couvercle étant mis en place dans le logement de pile.

De manière générale, l'ensemble des figures ne représente que les éléments nécessaires à la compréhension de la présente invention dans un but de clarté de l'exposé qui suit.

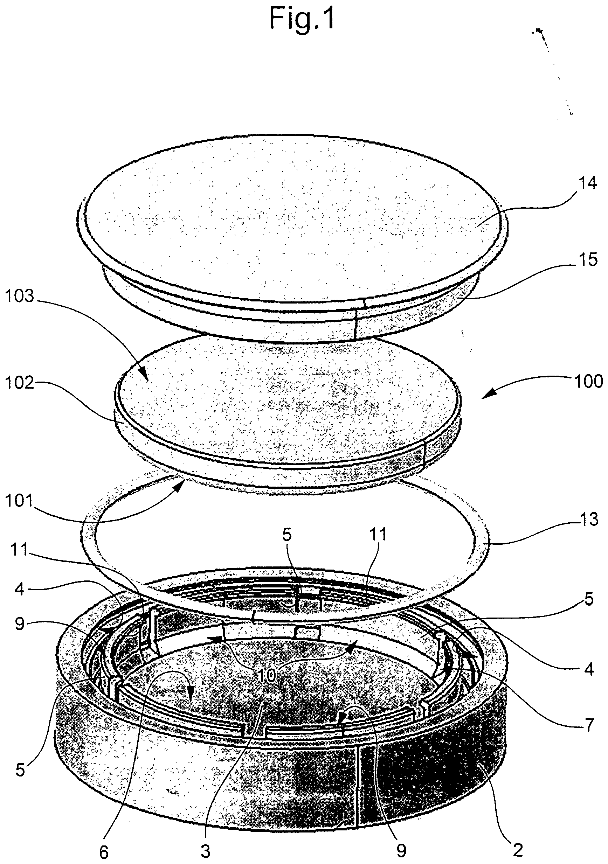

La figure 1 représente un dispositif de montage de pile 100 pour appareil électronique portable selon un premier mode de réalisation, le dispositif étant représenté en vue éclatée pour en faciliter la compréhension.

Le dispositif comporte une base 2 qui est représentée ici comme un élément à part entière mais qui peut être une portion d'un boîtier d'appareil électronique portable. La base 2 comporte un logement 3 qui est représenté ici de forme cylindrique, à titre illustratif non limitatif, présentant une ouverture 4 circulaire.

Des languettes 5 sont disposées de manière régulièrement espacée à la périphérie du logement 3. Chacune des languettes 5 est liée au fond 6 du logement par une partie proximale 7 et, s'étend ensuite verticalement depuis la partie proximale 7 en direction de l'ouverture 4, en une portion 8 à section sensiblement droite, d'épaisseur plus faible que la partie proximale 7. Chacune des languettes se termine par une portion recourbée 9, au niveau de sa partie proximale située du côté de l'ouverture 4.

On peut noter que chaque languette 5 présente une forme générale incurvée de courbure constante, dans le sens de sa longueur, de telle manière que l'ensemble des languettes 5 sont sensiblement dans le prolongement l'une de l'autre pour suivre la périphérie du logement 3 et définir une forme générale de cercle en vue de dessus.

On constate en outre que, d'une part, la surface interne de chaque languette 5 présente un chanfrein 10 dans la région de sa partie proximale 7, tandis que, d'autre part, la portion recourbée 9 présente une extrémité 11 à section sensiblement arrondie.

La périphérie du logement 3 présente un évidement annulaire formant un épaulement 12 apte à recevoir un joint torique 13.

Le dispositif de montage comporte en outre des moyens de fermeture représentés ici, de manière non limitative, par un couvercle 14. On peut également prévoir de manière alternative que les moyens de fermeture sont réalisés sous la forme d'un fond, permettant de fermer non seulement le logement 3 mais également le boîtier de l'appareil électronique portable, tel que déjà connu de l'art antérieur.

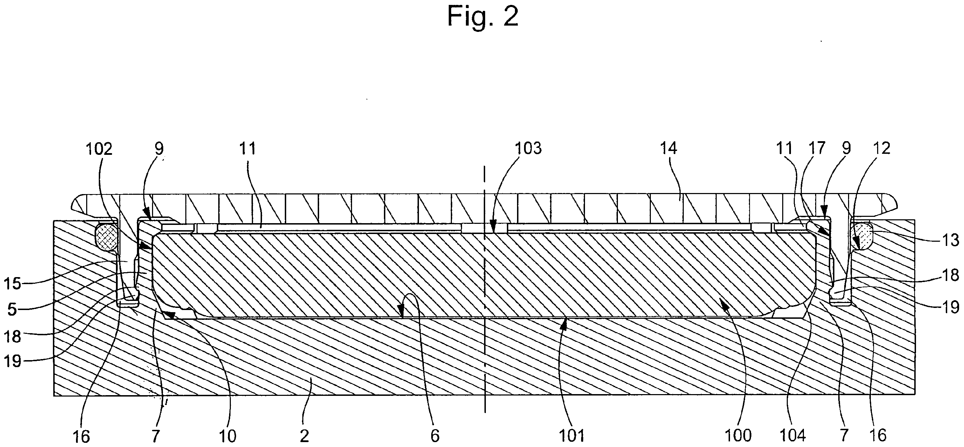

On constate sur la figure 1 que le couvercle 14 présente une paroi 15 en saillie par rapport à sa face destinée à être orientée vers l'intérieur du logement 3 et de forme annulaire. La fonction de la paroi annulaire 15 sera mieux expliquée en relation avec la figure 2.

La figure 2 représente une vue en coupe du dispositif de montage représenté sur la figure 1 selon un diamètre du logement coupant des languettes 5, la pile 100 étant disposée à l'intérieur de son logement 3 et le couvercle étant mis en place dans l'ouverture 4 du logement.

Les dimensions respectives de la pile 100 et du logement 3 sont telles que ce dernier est apte à recevoir la pile 100, la face intérieure 101 de la pile 100 venant en appui contre le fond 6 du logement 3 et la tranche 102 de la pile 100 venant en appui contre la surface interne des languettes 5 (visible sur la figure 2).

De manière alternative, on peut prévoir des plots de positionnement ou d'appui (non représentés) de la pile moulés avec le fond 6 du logement 3 et, éventuellement réalisés en un matériau compressible exerçant des frottements importants sur la pile, de manière à empêcher cette dernière de tourner sur elle-même.

On constate en outre que, lorsque la pile 100 est dans son logement 3, les portions recourbées 9 des languettes 5 sont en appui contre la face 103 de la pile orientée vers le couvercle 14. Ainsi, la pile est fermement maintenue en place contre le fond 6 du logement 3.

Le logement 3 comprend, à sa périphérie, une gorge annulaire 16 délimitée d'une part par la paroi périphérique du logement et, d'autre part, par les languettes 5. Les languettes 5, flexibles, peuvent ainsi se déformer vers la gorge 16 lors de la mise en place de la pile 100 dans le logement 3. En effet, les languettes 5, telles que représentées sur les figures 1 et 2, sont préférablement obtenues par un moulage de matière plastique simultané au moulage de la base 2 et du logement 3, la matière plastique utilisée présentant des propriétés élastiques. De ce fait et étant données les dimensions respectives du logement 3, des languettes 5 et de la pile 100, l'introduction de la pile dans le logement 3 est effectuée par un positionnement de la face 101 de la pile sur la portion recourbée 9 des languettes, suivi d'une pression exercée sur la face 103 de la pile en direction du fond 6 du logement. La zone de jonction entre la face 101 et la tranche 102 de la pile présente un arrondi 104 qui coopère avec l'extrémité arrondie 11 des languettes 5 au moment de l'opération de pression de la pile vers le fond 6 du logement. Lors de cette opération, les portions recourbées 9 des languettes sont simultanément repoussées en direction de la périphérie du logement 3, ce qui entraîne une déformation élastique des languettes 5 dans la gorge 16, permettant ainsi l'introduction de la pile dans le logement 3.

Une fois la pile 100 engagée au fond du logement 3, les languettes 5 reprennent leurs positions initiales respectives grâce à leur élasticité, tel que représenté sur la figure 2, pour assurer le maintien de la pile 100 dans le logement 3.

Le joint torique 13 ayant été préalablement mis en place sur l'épaulement 12 à la périphérie du logement 3, le couvercle 14 est mis en place dans l'ouverture 4 du logement.

La paroi 15 annulaire du couvercle 14 s'engage alors dans la gorge 16. Les dimensions de la paroi sont telles que sa surface interne se positionne en appui contre la surface externe des languettes 5 de manière à exercer sur ces dernières une force tendant à les repousser vers l'intérieur du logement 3. En outre, on notera que la surface externe de la paroi est appliquée contre le joint torique 13, ce qui contribue à l'étanchéité du logement. L'ensemble ainsi monté présente également une bonne rigidité. On constate en effet, sur la figure 2, que les zones d'appui de la paroi 15 respectivement avec les languettes 5 et avec le joint torique 13 sont situées sensiblement à une même distance du couvercle 14, cette distance étant par ailleurs faible.

Un système de fixation du couvercle 14 dans le logement 3 est par ailleurs prévu. Chacune des languettes 5 est pourvue d'un bourrelet 18 sur sa surface externe, au niveau de sa partie proximale 7, et s'étendant d'un bord de la languette à l'autre. La paroi 15 présente, sur sa surface interne, un évidement formant un cran 19, situé à proximité de l'extrémité de la paroi et s'étendant sur toute sa périphérie. Ainsi, lorsque le couvercle 14 est disposé dans le logement 3, l'ensemble des bourrelets 18 et le cran 19 sont situés en regard l'un de l'autre et coopèrent de manière à fixer le couvercle 14 dans le logement 3 par clipsage.

Par conséquent, dans le cas d'un choc violent tendant à dégager la pile 100 de son logement 3, les languettes sont susceptibles de subir une force radiale dirigée vers la périphérie du logement mais ne peuvent pas se déformer, du fait du blocage réalisé par la paroi 15 du couvercle 14. De plus, ce blocage est lui-même indirectement renforcé par l'appui de la paroi contre la périphérie du logement, via le joint torique 13, qui permet d'absorber l'excès d'énergie mécanique transmise par le mouvement brutal de la pile 100. On constate de plus que dans une telle situation de choc, le couvercle 14 ne subit aucune contrainte tendant à le chasser hors du logement 3, ce qui garantit une bonne fiabilité du dispositif de montage de pile qui vient d'être décrit, notamment du point de vue de l'étanchéité.

En ce qui concerne les moyens de fixation du couvercle 14 dans le logement 3, on peut prévoir de manière alternative que le bourrelet 18 est agencé sur la périphérie du logement 3 tandis que le cran 19 du couvercle est agencé sur la surface externe de la paroi 15.

On peut noter que les moyens de connexion électrique des pôles de la pile n'ont été ni décrits, ni représentés, dans la mesure où ils sont réalisés de manière conventionnelle et n'apportent pas de contribution particulière à la présente invention. L'homme du métier ne rencontrera pas de difficulté particulière pour leur mise en oeuvre. A titre d'exemple, on peut prévoir une première lame de contact conductrice dont une première extrémité est disposée entre une languette 5 et la tranche 102 de la pile 100, la seconde extrémité de la lame étant connectée à une première piste de conduction électrique reliée aux circuits électroniques de l'appareil portable. On prévoit en outre une seconde lame de contact conductrice dont une première extrémité est agencée entre la face interne 101 de la pile 100 et le fond 6 du logement, la seconde extrémité de la lame étant connectée à une seconde piste de conduction électrique, également reliée aux circuits électroniques de l'appareil portable.

D'autre part, on peut prévoir une variante de réalisation mettant en oeuvre un fond (non représenté) pour fermer le boîtier de l'appareil électronique portable, plutôt qu'un couvercle pour ne fermer que le logement de pile. Dans ce cas, le fond peut être muni d'une paroi similaire à celle décrite plus haut et disposée en saillie dans le logement de pile. Cependant, la mise en oeuvre de la structure exposée plus haut ne présente tout son intérêt que dans le cas d'un fond susceptible d'être retiré facilement du logement, autrement dit dans le cas d'un fond qui n'est pas vissé ou tenu par des vis, par exemple. Dans le cas d'un fond vissé ne risquant pas d'être chassé hors du logement, la structure selon le mode de réalisation précité permet toutefois d'améliorer la fiabilité du maintien de la pile dans son logement et donc la fiabilité de l'alimentation électrique des circuits électroniques de l'appareil portable en cas de choc.

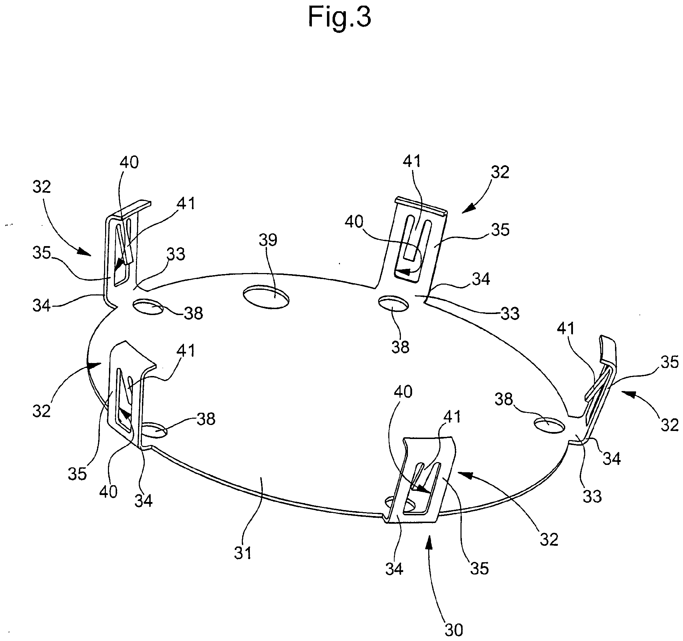

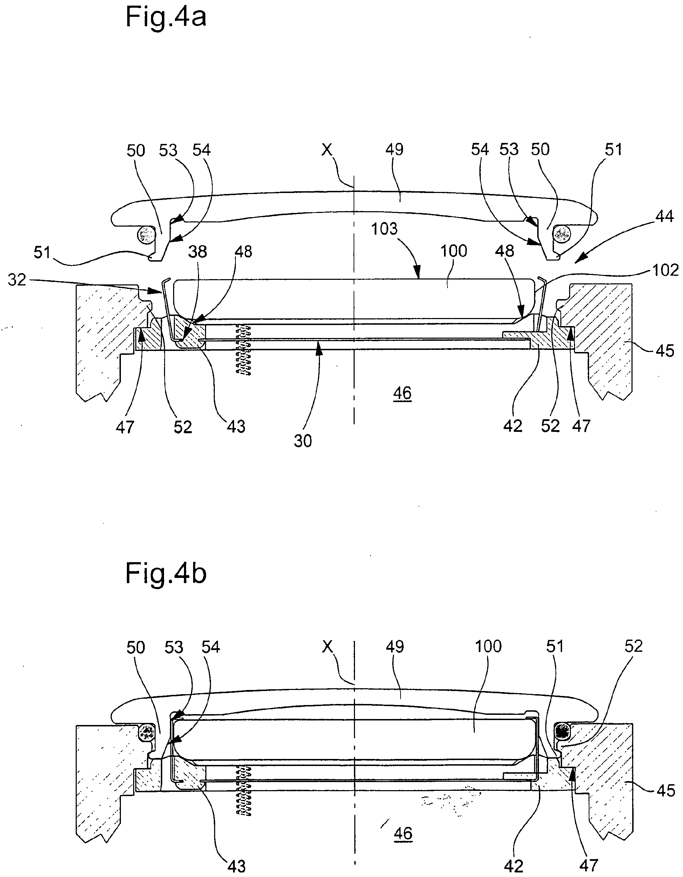

Les figures 3 et 4 illustrent un second mode de réalisation d'un dispositif de montage de pile dans un appareil électronique portable, dans lequel les moyens de retenue de la pile sont similaires à ceux décrits en relation avec le premier mode de réalisation et, permettent en outre d'assurer la connexion électrique des circuits électroniques de l'appareil portable avec l'un des pôles de la pile 100. La pile 100 étant du même type que celle décrite en relation avec les figures 1 et 2, les références numériques s'y rapportant ont été conservées.

L'élément principal des moyens utilisés pour garantir la retenue de la pile 100 selon le présent mode de réalisation ont été représentés seuls sur la figure 3 pour plus de clarté.

Cet élément principal est constitué d'une plaquette 30 réalisée en un matériau électriquement conducteur présentant des propriétés élastiques, préférablement un métal tel que du cuivre ou un alliage métallique tel que du laiton. La plaquette 30 comporte une partie principale 31, plane et en forme générale de disque, portant cinq languettes 32 identiques et régulièrement réparties sur la périphérie de la plaquette.

Les languettes 32 présentent chacune une première portion 33 s'étendant dans le prolongement de la partie principale 31 et se terminant par une portion courbe 34 réalisant la jonction avec une seconde portion droite 35. Chacune des portions droites 35 est agencée de manière à présenter un angle sensiblement supérieur à 90 degrés par rapport à la partie principale 31, à titre d'exemple illustratif. On peut prévoir, de façon plus générale, que l'angle formé entre chaque portion droite 35 et la partie principale 31 est compris entre 80 et 100 degrés. Chaque portion droite 35 se termine en une nouvelle portion courbe 36, dirigée vers le centre de la partie principale 31 et établissant la jonction avec une troisième portion courte 37 de la languette 32. Les troisièmes portions 37 de l'ensemble des languettes 32 sont situées sensiblement dans un même plan parallèle au plan de la partie principale 31 de la plaquette 30.

On constate sur la figure 3 que la partie principale 31 de la plaquette 30 comporte un trou 38 en regard de la première portion 33 de chacune des languettes 32. Un trou supplémentaire 39 est également visible sur la partie principale 31 de la plaquette. Les fonctions respectives des trous 38 et 39 seront exposées plus loin en relation avec la description des figures 4a et 4b.

En outre, chacune des portions droites 35 comprend un évidement 40 en son centre à l'intérieur duquel s'étend une patte 41, sensiblement droite et légèrement recourbée vers l'intérieur de la plaquette 30. De même, la fonction de ces pattes 41 sera exposée ci-dessous en relation avec les figures 4a et 4b.

Les figures 4a et 4b permettent de mieux comprendre le fonctionnement du dispositif de montage de pile selon le présent mode de réalisation, la plaquette 30 décrite en relation avec la figure 3 étant représentée montée dans le dispositif de montage.

La plaquette 30 est montée solidaire d'une pièce intermédiaire formant une entretoise 42, préférablement réalisée par moulage de matière plastique. La fixation de la plaquette 30 sur l'entretoise 42 peut être effectuée par tout moyen connu de l'homme du métier. Dans l'exemple représenté ici, l'entretoise 42 comporte une pluralité de tenons 43 (un seul étant visible sur la figure 4) dont la section présente un diamètre sensiblement inférieur au diamètre des trous 38 de la plaquette 30. Ainsi, lors du montage du présent dispositif, les tenons 43 de l'entretoise 42 sont enfilés dans les trous 38 puis sont comprimés à chaud pour présenter une structure finale du type rivet, tel qu'apparent des figures.

L'ensemble formé par l'entretoise 42 portant la plaquette 30 est disposé à l'intérieur d'un logement 44 de pile ménagé dans une base 45 d'un appareil électronique portable. A cet effet, la présente illustration laisse apparaître une ouverture cylindrique 46, prévue dans la base 45, pour permettre l'insertion de l'entretoise et la plaquette depuis l'intérieur de l'appareil électronique portable. L'ouverture 46 se termine par un épaulement annulaire 47 formant la limite intérieure du logement 44 et sur lequel l'entretoise 42 est disposée en appui pour être maintenue dans une position axiale fixe par rapport au logement 44.

La figure 4a permet de constater que les languettes 32 de la plaquette 30 sont sensiblement écartées dans leur position de repos, c'est-à-dire qu'elles présentent un angle légèrement supérieur à 90 degrés par rapport à la partie principale 31. On remarque que dans cette configuration, dans le cas particulier représenté ici, l'ouverture définie par les extrémités des portions recourbées des languettes 32 présente un diamètre plus grand que celui de la pile 100. Cette caractéristique permet avantageusement d'introduire la pile 100 dans le logement 44 en la déposant simplement sur le dessus de l'entretoise 42, par un mouvement comprenant exclusivement une translation rectiligne de direction confondue avec l'axe X de symétrie du logement. Bien entendu, on peut prévoir un diamètre de l'ouverture définie par les languettes plus faible de sorte que ces dernières se déforment de manière élastique au moment de l'introduction de la pile, tel que décrit pour le premier mode de réalisation. Dans ce cas, l'introduction de la pile au fond du logement doit comporter une étape supplémentaire, par rapport à la description qui précède, consistant à presser sur la pile pour déformer les languettes après l'avoir simplement déposée sur le dessus de celles-ci.

L'entretoise 42 comporte en outre une surface d'appui 48 pour la pile 100 permettant de définir sensiblement la position axiale de cette dernière par rapport au logement 44.

Une fois la pile 100 en place dans le logement 44, ce dernier peut être fermé par un couvercle 49 présentant une forme similaire à celle du couvercle 14 décrit en relation avec le premier mode de réalisation. Le couvercle 49 présente en effet une paroi annulaire 50 qui est agencée pour remplir une double fonction de fixation du couvercle 49 dans le logement 44 et de maintien des languettes 32 contre la pile 100.

Dans ce but, l'extrémité libre de la paroi 50 présente une courte portion recourbée formant un cran 51 en direction de la périphérie du logement 44 et destinée à coopérer avec un bourrelet 52 ménagé sur la périphérie du logement 44.

D'autre part, la surface interne de la paroi 50 présente deux portions, depuis le couvercle 49 vers l'extrémité recourbée formant le cran 51, une première portion 53 étant sensiblement parallèle à l'axe X du logement 44, tandis que la seconde portion 54 est légèrement inclinée par rapport à l'axe X en direction de la périphérie du logement. Il est apparent de la figure 4a que l'inclinaison de la seconde portion 54 de la paroi 50 est préférablement ajustée de telle manière que le diamètre interne de la paroi au niveau du cran 51 est sensiblement supérieur au diamètre de l'ouverture définie par les languettes 32. Ainsi, lorsque le couvercle 49 est mis en place au-dessus du logement 44, la seconde portion 54 du rebord 50 entre en contact avec la portion courbée 36 de chacune des languettes 32 pour remplir une fonction de surface de guidage. En outre, du fait de l'inclinaison de la seconde portion 54, plus le couvercle 49 est abaissé dans le logement 44, plus les languettes 32 subissent une déformation élastique en direction de l'axe X du logement.

Lorsque le couvercle 49 est mis en place dans le logement 44, la paroi 50 ayant également subi une déformation élastique pour permettre le passage du cran 51 sous le bourrelet 52, les languettes 32 sont appliquées contre la tranche 102 de la pile 100, par le biais de leurs surfaces internes et de leurs pattes 41 respectives. Une telle configuration est visible sur la figure 4b. Les languettes sont alors maintenues dans cette position fermée du fait de l'appui formé par la première portion 53 de la paroi 50.

On constate alors que les troisièmes portions courtes 37 de chaque languette 32 sont disposées en appui sur la face 103 de la pile, orientée vers le couvercle 49, assurant ainsi la retenue axiale de la pile 100 dans le logement 44.

La plaquette 30 étant préférablement obtenue par étampage d'une feuille de matériau métallique, il apparaît clairement de la figure 4b que les languettes 32 permettent d'établir une connexion électrique avec un pôle de la pile 100 (typiquement le pôle positif, accessible sur la face 103 et la tranche 102), en plus d'assurer la retenue mécanique de cette dernière dans le logement 44.

En outre, la forme particulière des pattes 41, décrites plus haut en relation avec la figure 3, garantit un bon contact entre les languettes 32 et la tranche 102 de la pile 100, du fait qu'elles sont préformées en direction de l'intérieur du logement 44.

Des moyens supplémentaires (non représentés) sont prévus par ailleurs pour établir une connexion électrique de la plaquette 30 avec les circuits électroniques de l'appareil électronique portable.

Des moyens de connexion électrique avec le second pôle de la pile 100, accessible par la face 101 de la pile, orientée vers le fond du logement 44, ont été représentés à titre d'exemple non limitatif. Ces moyens de connexion comprennent par exemple un ressort 55 du type ressort-boudin réalisé en matériau électriquement conducteur et, relié par une première extrémité (non représentée) aux circuits électroniques de l'appareil électronique portable. La seconde extrémité du ressort 55 est mise en contact avec la face 101 de la pile 100, le ressort s'étendant au travers du trou 39 de la plaquette 30 (représenté sur la figure 3) et au travers d'un trou similaire (non représenté) ménagé dans l'entretoise 42, en regard du trou 39.

On peut noter que la structure du présent mode de réalisation assure une qualité de retenue de la pile 100 dans le logement 44 comparable à celle du premier mode de réalisation. Ainsi, le maintien de la pile 100 et le maintien du couvercle 49 dans le logement 44 en cas de choc violent sont garantis avec la même efficacité que dans le cas de la structure précédemment décrite en relation avec les figures 1 et 2.

Par ailleurs, on peut également noter qu'un joint torique 56 est agencé autour de la paroi 50 pour assurer l'étanchéité du logement 44 lorsque le couvercle 49 est mis en place, par compression entre le couvercle 49 et le bourrelet 52.

De même que pour le mode de réalisation décrit plus haut, on peut prévoir une mise en oeuvre du dispositif de montage de pile qui vient d'être décrit dans le cas où le boîtier de l'appareil électronique portable est fermé par un fond qui assure également la fermeture du logement de pile. Dans ce cas, une paroi du même type que la paroi 50 doit être agencée sur la face du fond destinée à être placée en regard du logement de pile.

Il ressort de la description qui précède, de deux exemples de réalisation conformes à la présente invention, que la structure du présent dispositif de montage de pile dans un appareil électronique permet aisément d'envisager une automatisation du montage de la pile dans le cadre de l'assemblage de l'appareil électronique. En effet, dans le cas du premier mode de réalisation, il suffit de déposer la pile sur le dessus des languettes avant d'exercer sur elle une légère pression en direction du logement pour la mettre en place, avant de fermer le logement avec le couvercle.
Dans le cas du second mode de réalisation, la mise en place de la pile est encore plus simple dans la mesure où la pression précitée n'est même pas nécessaire pour faire descendre la pile dans le logement. L'opération de dépôt de la pile dans le logement peut être réalisée par une simple translation rectiligne depuis l'environnement extérieur vers l'intérieur du logement. Cette propriété particulière présente un avantage économique certain, en particulier dans le cadre de la production d'appareils électroniques fabriqués en grand nombre d'exemplaires.

La description qui précède correspond à des modes de réalisation préférés et ne saurait en aucun cas être considérée comme limitative, en ce qui concerne plus particulièrement la forme décrite pour les différents éléments structurels composant le dispositif de montage ou leurs matériaux. L'homme du métier ne rencontrera pas de difficulté particulière pour choisir, par exemple pour les moyens de retenue de la pile, tout autre matériau présentant les propriétés mécaniques nécessaires à la mise en oeuvre de la présente invention. De même, le nombre de languettes décrit dans l'un ou l'autre mode de réalisation n'est pas limitatif. L'homme du métier pourra mettre en oeuvre un nombre différent de languettes tout en prenant garde de maintenir un bon compromis d'une part entre la longueur d'une languette et son élasticité, plus particulièrement pour le premier mode de réalisation, et d'autre part, entre le nombre de languettes et une bonne retenue de la pile, plus particulièrement pour le second mode de réalisation.

Les applications possibles pour un tel dispositif de montage de pile sont très nombreuses puisque la présente invention peut être mise en oeuvre pour tout type d'appareil électronique portable, notamment à la main ou au poignet, tel une montre-bracelet électronique par exemple.

## Revendications

1. Appareil électronique portable comportant des circuits électroniques alimentés par une source d'énergie électrique (100) telle qu'une batterie, et comportant un logement (3, 44) agencé pour la réception d'une source d'énergie électrique (100), et un couvercle (14, 49) agencé pour fermer ledit logement (3, 44), lequel logement (3, 44) présentant, à proximité de sa périphérie, des moyens de retenue (5, 32) de la source d'énergie présentant au moins une première position de fermeture dans laquelle ladite source d'énergie (100) est retenue dans ledit logement (3, 44), **caractérisé en ce que** ledit couvercle (14, 49) présente des moyens de maintien (15, 50) saillants dans ledit logement (3, 44) destinés à être interposés radialement entre lesdits moyens de retenue (5, 32) et la périphérie du logement (3, 44) et, agencés pour maintenir lesdits moyens de retenue (5, 32) dans ladite première position de fermeture et interdire leur passage dans une autre position, et **caractérisé en ce que** ledit logement (3, 44) comporte une ouverture (4) vers l'extérieur située en regard d'un fond (6, 42), et **en ce que** lesdits moyens de retenue comprennent des languettes (5, 32) déformables élastiquement et s'étendant depuis ledit fond (6, 42) dudit logement (3, 44) en direction de sa dite ouverture (4), l'extrémité de chacune desdites languettes (5, 32) comprenant une portion recourbée (9, 37) formant une zone d'appui susceptible d'être disposée sur une face (103) de ladite source d'énergie (100) orientée du côté de ladite ouverture (4).

2. Appareil électronique portable selon la revendication 1, **caractérisé en ce que** lesdites languettes (5, 32) sont élastiques et **en ce que** lesdits moyens de maintien comprennent une paroi annulaire (15, 50) disposée vers la périphérie dudit couvercle (14, 49) et présentant une zone d'appui susceptible d'être appliquée contre lesdites languettes (5, 32) pour les déformer en direction de l'intérieur dudit logement (3, 44).

3. Appareil électronique portable selon la revendication 2, ledit logement (3, 44) de source d'énergie étant sensiblement cylindrique, **caractérisé en ce que** l'ouverture définie par les extrémités desdites languettes (5, 32) présente des dimensions inférieures aux dimensions de la source d'énergie (100).

4. Appareil électronique portable selon la revendication 2 ou 3, **caractérisé en ce que** ledit logement (3, 44) de source d'énergie comporte un bourrelet (18, 52) ménagé dans sa périphérie, ledit couvercle (14, 49) comportant des moyens (19, 51) susceptibles de coopérer avec ledit bourrelet (18, 52) pour permettre son assemblage par cran dans ledit logement.

5. Appareil électronique portable selon la revendication 4, **caractérisé en ce que** lesdits moyens comprennent un cran (19, 51) réalisé sur la surface externe de ladite paroi annulaire (15, 50) et susceptible de coopérer avec ledit bourrelet (18).

6. Appareil électronique portable selon la revendication 2 ou 3, **caractérisé en ce que** chacune desdites languettes (5, 32) élastiques comporte un bourrelet (18) agencé à proximité de la partie proximale (7) de sa surface externe, ledit couvercle (14) comportant des moyens (19) susceptibles de coopérer avec l'ensemble desdits bourrelets (18) pour permettre son assemblage par cran dans ledit logement (3).

7. Appareil électronique portable selon la revendication 6, **caractérisé en ce que** lesdits moyens comprennent un cran (19) réalisé dans la partie inférieure de la surface interne de ladite paroi annulaire (15) et susceptible de coopérer simultanément avec l'ensemble desdits bourrelets (18).

8. Appareil électronique portable selon l'une des revendications 1 à 7, **caractérisé en ce que** lesdits moyens de retenue (5) de la source d'énergie ou languettes sont réalisés d'une pièce avec ledit logement (3) de source d'énergie, ce dernier étant obtenu par moulage de matière plastique.

9. Appareil électronique portable selon l'une des revendications 1 à 8, **caractérisé en ce que** les extrémités (11) respectives des languettes (5) sont arrondies pour faciliter l'insertion de la source d'énergie dans ledit logement (3).

10. Appareil électronique portable selon l'une des revendications 1 à 9, **caractérisé en ce que** ledit logement (3, 44) est agencé pour la réception d'une source d'énergie électrique (100) qui est une pile-bouton, et **en ce que** lesdites languettes (32) sont réalisées en un matériau électriquement conducteur et assurent en outre une fonction de contact électrique avec une tranche (102) de ladite pile-bouton (100) et/ou une face (103) de ladite pile-bouton orientée vers ladite ouverture (4), lesdites languettes (32) étant reliées à des moyens de connexion vers des circuits électroniques dudit appareil électronique.

11. Appareil électronique portable selon la revendication 10, **caractérisé en ce que** ledit appareil comporte une plaquette (30) sensiblement plane en matériau électriquement conducteur servant de support pour lesdites languettes (32) et disposée dans le fond dudit logement (3, 44), un élément intermédiaire (42) réalisé en un matériau électriquement isolant, solidaire dudit logement (3, 44), étant en outre prévu pour former au moins partiellement une surface d'appui (48) pour la face (101) de ladite pile-bouton (100) orientée vers le fond dudit logement (3, 44) et isoler cette dernière de ladite plaquette (30).

12. Appareil électronique portable selon la revendication 11, **caractérisé en ce que** ledit élément intermédiaire (42) comporte un emplacement dans lequel est fixée ladite plaquette (30), ledit élément intermédiaire comportant en outre des éléments saillants (48) par rapport au plan (31) de ladite plaquette (30) et orientés vers l'ouverture du logement de pile formant ladite zone d'appui pour ladite pile-bouton.

13. Appareil électronique portable selon l'une des revendications 10 à 12, **caractérisé en ce que** les extrémités desdites languettes (32) au repos définissent une ouverture qui présente des dimensions supérieures aux dimensions transversales de la pile (100).

14. Appareil électronique portable selon l'une quelconque des revendications 10 à 13, **caractérisé en ce que** ledit logement (3, 44) de pile (100) comporte un bourrelet (52) ménagé dans sa périphérie, et **en ce que** ladite paroi annulaire (50) du couvercle (49) comporte en outre un cran (51) réalisé sur sa surface externe susceptible de coopérer avec ledit bourrelet (52) pour permettre un assemblage par cran dudit couvercle (49) dans ledit logement (44).

15. Appareil électronique portable selon l'une des revendications 1 à 14, **caractérisé en ce que** ledit appareil comporte des moyens (13, 56) pour assurer l'étanchéité entre ledit couvercle (14, 49) et ledit logement (3, 44).

16. Appareil électronique portable selon l'une des revendications 1 à 15, **caractérisé en ce que** ledit appareil est une montre.

## Patentansprüche

1. Tragbare elektronische Vorrichtung, die elektronische Schaltungen umfasst, die durch eine Quelle (100) für elektrische Energie wie etwa eine Batterie versorgt werden, und die eine Aufnahme (3, 44), die dafür ausgelegt ist, eine Quelle (100) für elektrische Energie aufzunehmen, und einen Deckel (14, 49), der dafür ausgelegt ist, die Aufnahme (3, 44) zu verschließen, aufweist, wobei die Aufnahme (3, 44) in der Nähe ihres Umfangs Mittel (5, 32) zum Halten der Energiequelle aufweist, die mindestens eine erste Verschlussposition, in der die Energiequelle (100) in der Aufnahme (3, 44) gehalten wird, aufweisen, **dadurch gekennzeichnet, dass** der Deckel (14, 49) Haltemittel (15, 50) aufweist, die in die Aufnahme (3, 44) vorstehen und dazu bestimmt sind, radial zwischen die Haltemittel (5, 32) und den Umfang der Aufnahme (3, 44) eingesetzt zu werden, und dafür ausgelegt sind, die Haltemittel (5, 32) in der ersten Verschlussposition zu halten und ihren Übergang in eine andere Position zu verhindern, und **dadurch gekennzeichnet, dass** die Aufnahme (3, 44) eine Öffnung (4) nach außen aufweist, die sich gegenüber einem Boden (6, 42) befindet, und dass die Haltemittel elastisch verformbare Zungen (5, 32) aufweisen, die sich von dem Boden (6, 42) der Aufnahme (3, 44) in Richtung ihrer Öffnung (4) erstrecken, wobei das Ende jeder der Zungen (5, 32) einen umgebogenen Abschnitt (9, 37) aufweist, der einen Abstützbereich bildet, der dazu ausgebildet ist, auf einer Fläche (103) der Energiequelle (100), die zur Seite der Öffnung (4) gerichtet ist, angeordnet zu werden.

2. Tragbare elektronische Vorrichtung nach Anspruch 1, **dadurch gekennzeichnet, dass** die Zungen (5, 32) elastisch sind und dass die Haltemittel eine ringförmige Wand (15, 50) umfassen, die in der Nähe des Umfangs des Deckels (14, 49) angeordnet ist, und einen Abstützbereich aufweisen, der gegen die Zungen (5, 32) andrückbar ist, um diese in die Aufnahme (3, 44) hinein zu biegen.

3. Tragbare elektronische Vorrichtung nach Anspruch 2, wobei die Aufnahme (3, 44) für die Energiequelle im Wesentlichen zylindrisch ist, **dadurch gekennzeichnet, dass** die durch die Enden der Zungen (5, 32) definierte Öffnung Abmessungen besitzt, die kleiner als die Abmessungen der Energiequelle (100) sind.

4. Tragbare elektronische Vorrichtung nach Anspruch 2 oder 3, **dadurch gekennzeichnet, dass** die Aufnahme (3, 44) für die Energiequelle einen an ihrem Umfang ausgebildeten Wulst (18, 52) aufweist, wobei der Deckel (14, 49) Mittel (19, 51) aufweist, die geeignet sind, mit dem Wulst (18, 52) zusammenzuwirken, um seine Montage durch Einrasten in der Aufnahme zu ermöglichen.

5. Tragbare elektronische Vorrichtung nach Anspruch 4, **dadurch gekennzeichnet, dass** die Mittel eine Raste (19, 51) aufweisen, die in der äußeren Oberfläche der ringförmigen Wand (15, 50) ausgebildet ist und geeignet ist, mit dem Wulst (18) zusammenzuwirken.

6. Tragbare elektronische Vorrichtung nach Anspruch 2 oder 3, **dadurch gekennzeichnet, dass** jede elastische Zunge (5, 32) einen Wulst (18) aufweist, der in der Nähe des proximalen Abschnitts (7) ihrer äußeren Oberfläche angeordnet ist, wobei der Deckel (14) Mittel (19) aufweist, die geeignet sind, mit der Gesamtheit der Wulste (18) zusammenzuwirken, um seine Montage durch Einrasten in der Aufnahme (3) zu ermöglichen.

7. Tragbare elektronische Vorrichtung nach Anspruch 6, **dadurch gekennzeichnet, dass** die Mittel eine Raste (19) aufweisen, die in dem unteren Teil der inneren Oberfläche der ringförmigen Wand (15) ausgebildet ist und geeignet ist, gleichzeitig mit der Gesamtheit von Wulsten (18) zusammenzuwirken.

8. Tragbare elektronische Vorrichtung nach einem der Ansprüche 1 bis 7, **dadurch gekennzeichnet, dass** die Mittel (5) zum Halten der Energiequelle oder Zungen einteilig mit der Aufnahme (3) für die Energiequelle ausgebildet sind, wobei diese Letztere durch Formguss aus Kunststoff erhalten wird.

9. Tragbare elektronische Vorrichtung nach einem der Ansprüche 1 bis 8, **dadurch gekennzeichnet, dass** die jeweiligen Enden (11) der Zungen (5) abgerundet sind, um das Einsetzen der Energiequelle in die Aufnahme (3) zu erleichtern.

10. Tragbare elektronische Vorrichtung nach einem der Ansprüche 1 bis 9, **dadurch gekennzeichnet, dass** die Aufnahme (3, 44) dafür ausgelegt ist, eine Quelle (100) für elektrische Energie, die eine Knopfzelle ist, aufzunehmen, und dass die Zungen (32) aus einem elektrisch leitenden Material ausgebildet sind und außerdem die Funktion des elektrischen Kontakts mit einer Seitenfläche (102) der Knopfzelle (100) und/oder mit einer zur Öffnung (4) gerichteten Fläche (103) der Knopfzelle gewährleisten, wobei die Zungen (32) mit Mitteln für den Anschluss an elektronische Schaltungen der elektronischen Vorrichtung verbunden sind.

11. Tragbare elektronische Vorrichtung nach Anspruch 10, **dadurch gekennzeichnet, dass** die Vorrichtung eine im Wesentlichen ebene Platte (30) aus einem elektrisch leitenden Material aufweist, die als Träger für die Zungen (32) dient und in dem Boden der Aufnahme (3, 44) angeordnet ist, wobei außerdem ein Zwischenelement (42), das aus einem elektrisch isolierenden Material ausgebildet ist und mit der Aufnahme (3, 44) fest verbunden ist, vorgesehen ist, um zumindest teilweise eine Abstützoberfläche (48) für die zum Boden der Aufnahme (3, 44) gerichtete Fläche (101) der Knopfzelle (100) zu bilden und diese Letztere gegenüber der Platte (30) zu isolieren.

12. Tragbare elektronische Vorrichtung nach Anspruch 11, **dadurch gekennzeichnet, dass** das Zwischenelement (42) eine Stelle aufweist, an der die Platte (30) befestigt ist, wobei das Zwischenelement außerdem Elemente (48) aufweist, die in Bezug auf die Ebene (31) der Platte (30) vorstehen und zur Öffnung der Aufnahme der Zelle gerichtet sind und den Abstützbereich für die Knopfzelle bilden.

13. Tragbare elektronische Vorrichtung nach einem der Ansprüche 10 bis 12, **dadurch gekennzeichnet, dass** die Enden der Zungen (32) im entspannten Zustand eine Öffnung definieren, die Abmessungen besitzt, die größer als die transversalen Abmessungen der Zelle (100) sind.

14. Tragbare elektronische Vorrichtung nach einem der Ansprüche 10 bis 13, **dadurch gekennzeichnet, dass** die Aufnahme (3, 44) der Zelle (100) einen an seinem Umfang ausgebildeten Wulst (52) aufweist und dass die ringförmige Wand (50) des Deckels (49) außerdem eine in ihrer äußeren Oberfläche ausgebildete Raste (51) aufweist, die geeignet ist, mit dem Wulst (52) zusammenzuwirken, um eine Montage durch Einrasten des Deckels (49) in der Aufnahme (44) zu ermöglichen.

15. Tragbare elektronische Vorrichtung nach einem der Ansprüche 1 bis 14, **dadurch gekennzeichnet, dass** die Vorrichtung Mittel (13, 56) aufweist, um die Abdichtung zwischen dem Deckel (14, 49) und der Aufnahme (3, 44) zu gewährleisten.

16. Tragbare elektronische Vorrichtung nach einem der Ansprüche 1 bis 15, **dadurch gekennzeichnet, dass** die Vorrichtung eine Uhr ist.

## Claims

1. Portable electronic device including electronic circuits powered by an electrical energy source (100) such as a battery, and including a housing (3, 44) arranged for receiving an electrical energy source (100), and a cover (14, 49) arranged to close said housing (3, 44), said housing (3, 44) presenting, close to the periphery thereof, means (5, 32) for retaining the energy source having at least a first closure position in which said energy source (100) is retained inside said housing (3, 44), **characterized in that** said cover (14, 49) has holding means (15, 50) projecting into said housing (3, 44) intended to be inserted radially between said retaining means (5, 32) and the periphery of the housing (3, 44) and, arranged to hold said retaining means (5, 32) in said first closure position and to prevent said means changing into another position, and **characterized in that** said housing (3, 44) includes an opening (4) to the exterior located opposite a bottom (6, 42), and **in that** said retaining means include elastically deformable tongues (5, 32) extending from said bottom (6, 42) of said housing (3, 44) towards said opening (4), the end of each of said tongues (5, 32) including a bent portion (9, 37) forming a support area capable of being disposed on a face (103) of said energy source (100) oriented on the side of said opening (4).

2. Portable electronic device according to claim 1, **characterized in that** said tongues (5, 32) are resilient and **in that** said holding means include an annular wall (15, 50) disposed towards the periphery of said cover (14, 49) and having a support area capable of being applied against said tongues (5, 32) to deform the latter in the direction of the interior of said housing (3, 44).

3. Portable electronic device according to claim 2, wherein said energy source housing (3, 44) is substantially cylindrical, **characterized in that** the opening defined by the ends of said tongues (5, 32) has dimensions smaller than the dimensions of the energy source (100).

4. Portable electronic device according to claim 2 or 3, **characterized in that** said energy source housing (3, 44) includes a flange (18, 52) arranged in the periphery thereof, said cover (14, 49) including means (19, 51) capable of cooperating with said flange (18, 52) to permit the snap-fit assembly thereof inside said housing.

5. Portable electronic device according to claim 4, **characterized in that** said means include a snap element (19, 51) made on the outer surface of said annular wall (15, 50) and capable of cooperating with said flange (18).

6. Portable electronic device according to claim 2 or 3, **characterized in that** each of said resilient tongues (5, 32) includes a flange (18) arranged close to the proximal portion (7) of the outer surface thereof, said cover (14) including means (19) capable of cooperating with all said flanges (18) to permit snap-fit assembly inside said housing (3).

7. Portable electronic device according to claim 6, **characterized in that** said means include a snap element (19) made in the lower portion of the inner surface of said annular wall (15) and capable of cooperating simultaneously with all said flanges (18).

8. Portable electronic device according to any of claims 1 to 7, **characterized in that** said energy source retaining means (5) or tongues are made in one piece with said energy source housing (3), the latter being obtaining by moulding plastic material.

9. Portable electronic device according to any of claims 1 to 8, **characterized in that** the respective ends (11) of the tongues (5) are rounded to facilitate the insertion of the energy source inside said housing (3).

10. Portable electronic device according to any of claims 1 to 9, **characterized in that** said housing (3, 44) is arranged to receive an electrical energy source (100) which is a button cell battery, and **in that** said tongues (32) are made of an electrically conductive material and further ensure an electrical contact function with an edge (102) of said button cell battery (100) and/or a face (103) of said button cell battery oriented towards said opening (4), said tongues (32) being connected to means for connection to electronic circuits of said electronic device.

11. Portable electronic device according to claim 10, **characterized in that** said device includes a substantially flat plate (30) made of electrically conductive material acting as a support element for said tongues (32), and disposed in the bottom of said housing (3, 44), an intermediate element (42) made of an insulating material, integral with said housing (3, 44), being further provided to at least partially form a support surface (48) for the face (101) of said button cell battery (100) oriented towards the bottom of said housing (3, 44) and to insulate the latter from said plate (30).

12. Portable electronic device according to claim 11, **characterized in that** said intermediate element (42) includes a place in which said plate (30) is secured, said intermediate element further including elements (48) protruding with respect to the plane (31) of said plate (30) and oriented towards the battery housing opening forming said support area for said button cell battery.

13. Portable electronic device according to any of claims 10 to 12, **characterized in that** the ends of said tongues (32) at rest define an opening which has dimensions greater than the transverse dimensions of the battery (100).

14. Portable electronic device according to any of claims 10 to 13, **characterized in that** said housing (3, 44) for the battery (100) includes a flange (52) arranged in the periphery thereof, and **in that** said annular wall (50) of the cover (49) further includes a snap element (51) made on the outer surface thereof capable of cooperating with said flange (52) to permit the snap-fit assembly of said cover (49) inside said housing (44).

15. Portable electronic device according to any of claims 1 to 14, **characterized in that** said device includes means (13, 56) for ensuring the sealing between said cover (14, 49) and said housing (3, 44).

16. Portable electronic device according to any of claims 1 to 15, **characterized in that** said device is a watch.
